# EUROPEAN PATENT SPECIFICATION

(11) **EP 3 812 788 B1**
(45) Date of publication and mention of the grant of the patent: **28.12.2022**
(21) Application number: 20172991.0
(22) Date of filing: 05.05.2020
(51) Int. Cl.: G01S 7/00, G01S 13/00, G01S 13/90

(54) **DEVICE AND SYSTEM FOR SIGNAL SYNCHRONIZATION**
VORRICHTUNG UND SYSTEM ZUR SIGNALSYNCHRONISATION
DISPOSITIF ET SYSTÈME DE SYNCHRONISATION DE SIGNAL

(30) Priority: 24.10.2019 CN 201911019680
(43) Date of publication of application: 28.04.2021
(73) Proprietor: Institute of Electronics, Chinese Academy of Sciences, Beijing 100190 (CN)
(72) Inventor: WANG, Yu, Beijing, 100190 (CN); LIANG, Da, Beijing, 100190 (CN); LIU, Kaiyu, Beijing, 100190 (CN); LIN, Haoyu, Beijing, 100190 (CN); ZHANG, Heng, Beijing, 100190 (CN); CHEN, Yafeng, Beijing, 100190 (CN); LIU, Dacheng, Beijing, 100190 (CN); DENG, Yunkai, Beijing, 100190 (CN)
(74) Representative: Brevalex

(56) References cited:
- CN-A- 109 725 295
- CN-A- 109 917 388
- US-B2- 9 002 672

## Description

### TECHNICAL FIELD

The disclosure relates to the technical field of radar, and more particularly, to a system for signal synchronization. The related art can be known from CN109917388A

### BACKGROUND

A Synthetic Aperture Radar (SAR) is an active microwave imaging radar that may be installed on flight platforms such as aircrafts, satellites, missiles, etc. Since the SAR can carry out all-day and all-weather observations and has a certain surface penetration capability, the SAR has unique advantages in the application of aspects such as disaster monitoring, resource exploration, marine monitoring, environmental monitoring, mapping, and military reconnaissance.

Compared with a monostatic SAR, a bistatic SAR has the advantages of flexible configuration, rich information acquisition, anti-interception, anti-interference and the ability of single-pass interferometry due to special configurations for transmit and receive separation. The advantages and application prospects have made the bistatic SAR more and more popular in recent years. The bistatic SAR system mounts the radar on a plurality of satellites flying in formation, to form a bistatic radar system, which completes tasks such as high-resolution imaging of a wide swath, ground elevation measurement, ocean current velocity measurement, and ground moving target monitoring. In bistatic SAR system, primary satellite transmits the radar signal to the ground, and both primary and secondary satellites receive echoes from the ground. However, since the primary and secondary satellites use different oscillators, there will be phase errors in the azimuth that are introduced by oscillator frequency errors and accumulated over time, which will affect imaging focus and interferometry phase accuracy.

### SUMMARY

In order to solve the above technical problems, embodiments of the disclosure are intended to provide a system for signal synchronization.

The present invention is defined in the claims. The features of the system according to the present invention are defined in the independent claim, and the preferable features according to the present invention are defined in the dependent claims.

### BRIEF DESCRIPTION OF THE DRAWINGS

FIG. 1 is a schematic module structure diagram of a device for signal synchronization not being part of the invention.
FIG. 2 is a schematic composition structure diagram of a communication system not being part of the invention.
FIG. 3 is a schematic flowchart of generating a phase synchronization signal and a radar signal according to the invention.
FIG. 4 is a schematic composition structure diagram of a communication device not being part of the invention.
FIG. 5 is a schematic composition structure diagram of an improved double-satellite SAR system not being part of the invention.
FIG. 6 is a schematic composition structure diagram of a device for signal synchronization not being part of the invention.
FIG. 7 is a schematic composition structure diagram of a system for signal synchronization according to the invention.

### DETAILED DESCRIPTION

In order to understand the features and technical contents of the embodiments of the disclosure in more detail, the implementation of the embodiments of the disclosure will be described in detail with reference to the accompanying drawings. The attached drawings are for reference only and are not intended to limit the embodiments of the disclosure.

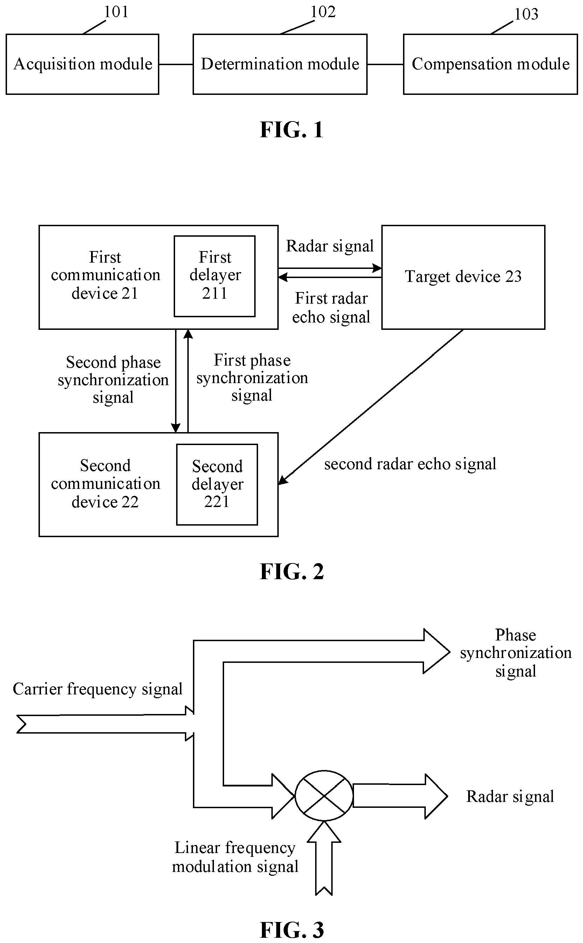

According to an embodiment of the disclosure not being part of the invention, there is provided a device for signal synchronization. FIG. 1 is a schematic module structure diagram of a device for signal synchronization not being part of the invention. As illustrated in FIG. 1, the device may specifically include an acquisition module 101, a determination module 102 and a compensation module 103.

The acquisition module 101 is configured to acquire a first synchronous receiving signal received by a first communication device and a second synchronous receiving signal received by a second communication device. The first communication device includes a first delayer which is configured to enable the first communication device to synchronously receive a first radar echo signal and the first synchronous receiving signal. The second communication device includes a second delayer which is configured to enable the second communication device to synchronously receive a second radar echo signal and the second synchronous receiving signal.

The determination module 102 is configured to determine a compensation phase for the second synchronous receiving signal based on the first synchronous receiving signal and the second synchronous receiving signal.

The compensation module 103 is configured to perform, according to the compensation phase, phase compensation on the second radar echo signal to obtain a compensated second radar echo signal. The first radar echo signal and the compensated second radar echo signal are in phase synchronization.

The first communication device includes a first communication module which is configured to transmit a radar signal to a target device and transmit a second phase synchronization signal to the second communication device.

The second communication device includes a second communication module which is configured to transmit a first phase synchronization signal to the first communication device.

The first communication module is further configured to receive the first radar echo signal formed after the target device reflects the radar signal, and receive, after delaying a first target time by using the first delayer, the first phase synchronization signal to obtain the first synchronous receiving signal, such that the first radar echo signal and the first synchronous receiving signal are received synchronously.

The second communication module is further configured to receive the second radar echo signal formed after the target device reflects the radar signal, and receive, after delaying a second target time by using the second delayer, the second phase synchronization signal to obtain the second synchronous receiving signal, such that the second radar echo signal and the second synchronous receiving signal are received synchronously.

The first communication device plays a role of transmitting a radar signal. That is, the first communication module of the first communication device transmits a radar signal to the target device, and transmits a second phase synchronization signal to the second communication module of the second communication device. The second communication module of the second communication device transmits a first phase synchronization signal to the first communication module of the first communication device. The first communication module of the first communication device receives a first radar echo signal reflected by the target device, and receives the first phase synchronization signal transmitted by the second communication module of the second communication device to obtain a first synchronous receiving signal. The built-in first delayer is used to synchronously receive the received first radar echo signal and first phase synchronization signal. The second communication module of the second communication device receives a second radar echo signal reflected by the target device, and receives the second phase synchronization signal transmitted by the first communication module of the first communication device to obtain a second synchronous receiving signal. The built-in second delayer is used to synchronously receive the received second radar echo signal and second phase synchronization signal.

In practical applications, the positions of the first communication device and the second communication device may be switched. That is, the radar signal may also be transmitted by the second communication device. The above signal synchronization device is adopt to implement phase synchronization of the first radar echo signal and the second radar echo signal.

According to an embodiment of the disclosure not being part of the invention, there is provided a communication interaction system. FIG. 2 is a schematic composition structure diagram of a communication system not being part of the invention. As illustrated in FIG. 2, the system includes a first communication device 21, a second communication device 22 and a target device 23.

The first communication device 21 transmits a radar signal to the target device 23, and transmits a second phase synchronization signal to the second communication device 22.

The target device 23 receives a radar signal transmitted by the first communication device 21, and reflects the received radar signal to form a first radar echo signal and a second radar echo signal. Then, the target device 23 transmits the first radar echo signal to the first communication device 21 and the second radar echo signal to the second communication device 22, respectively.

The first communication device 21 receives the first radar echo signal generated by the radar signal reflected from the target device 23, and receives the first phase synchronization signal transmitted by the second communication device 22. The first delayer 211 is used to synchronously receive the first radar echo signal and the first phase synchronization signal.

The second communication device 22 transmits the first phase synchronization signal to the first communication device 21, receives the second radar echo signal generated by the radar signal reflected from the target device 23, and receives the second phase synchronization signal transmitted by the first communication device 21. The second delayer 221 is used to synchronously receive the second radar echo signal and the second phase synchronization signal.

The first communication device is configured to simultaneously send the radar signal and the second phase synchronization signal.

Exemplarily, while transmitting the radar signal to the ground, the first communication module of the first communication device also transmits the second phase synchronization signal to the second communication module of the second communication device, such that an echo receiving window time of the second radar echo signal formed after the second communication module of the second communication device receives the radar signal reflected from the ground is not limited. Meanwhile, a pulse bandwidth of the second phase synchronization signal transmitted by the first communication module of the first communication device to the second communication module of the second communication device is also not limited. The pulse bandwidth is a pulse duration, which is generally measured in microseconds (µs).

The radar signal and the second phase synchronization signal are signals of the same carrier frequency.

Specifically, a path of a carrier frequency signal is divided into two paths that are transmitted simultaneously. Such a system design may simplify the arrangement of a transceiver of the phase synchronization signal, thereby reducing the complexity of the system design, and also avoiding the influence of the radar signal on the phase synchronization signal.

The first communication device further includes a generation module, configured to generate the radar signal by mixing a carrier frequency signal with a linear frequency modulation signal, and also configured to directly generate the second phase synchronization signal by using the carrier frequency signal.

FIG. 3 is a schematic flowchart of generating a phase synchronization signal and a radar signal according to the invention. A carrier frequency signal is divided into two paths for generating a phase synchronization signal and a radar signal. One path of the carrier frequency signal directly generates the phase synchronization signal, and the other path of the carrier frequency signal is mixed with a linear frequency modulation signal to generate the radar signal.

The determination module is specifically configured to obtain a peak phase difference based on a peak phase of the first synchronous receiving signal and a peak phase of the second synchronous receiving signal, and obtain the compensation phase based on the peak phase difference.

In practical applications, the synchronization signal processing device constructs a matched filter for the first synchronous receiving signal to perform pulse compression, then extracts a first peak phase of the first synchronous receiving signal. The synchronization signal processing device constructs a matched filter for the second synchronous receiving signal to perform pulse compression, then extracts a second peak phase of the second synchronous receiving signal. Next, a difference operation between a first peak phase and a second peak phase is performed to obtain a peak phase difference, and then the peak phase difference is divided by 2 to obtain a compensation phase.

The compensation module is configured to perform, according to the compensation phase, phase compensation on the second radar echo signal to obtain a compensated second radar echo signal. The first radar echo signal and the compensated second radar echo signal are in phase synchronization.

In practical applications, a compensation phase is obtained according to the peak difference between the first peak phase and the second peak phase. The compensation phase is interpolated according to a number of azimuth points in the second radar echo signal, to obtain an interpolated compensation phase. The second radar echo signal is compensated point by point based on the interpolated compensation phase, such that the first radar echo signal and the second radar echo signal are in phase synchronization. Since a carrier frequency of the second phase synchronization signal is the same as a carrier frequency of the radar signal, there is no need to transform the obtained synchronization data to a radar frequency according to a proportion for phase compensation, thereby making a compensation result more accurate.

By adopting the above technical solution, an acquisition module acquires a first synchronous receiving signal received by a first communication device and a second synchronous receiving signal received by a second communication device. The first communication device synchronously receives a first radar echo signal and the first synchronous receiving signal by using a first delayer. The second communication device synchronously receives a second radar echo signal and the second synchronous receiving signal by using a second delayer. A determination module determines a compensation phase for the second synchronous receiving signal based on the acquired first synchronous receiving signal and second synchronous receiving signal. A compensation module performs phase compensation on the second radar echo signal according to the compensation phase to obtain a compensated second radar echo signal. Therefore, phase synchronization between the first radar echo signal and the compensated second radar echo signal is achieved, which improves the imaging focus and the phase accuracy, and further improves the imaging quality.

In practical applications, the signal synchronization device may exist independently of the first communication device and the second communication device. For example, the signal synchronization device acquires a first synchronous receiving signal and a second synchronous receiving signal respectively, and then extracts a first peak phase of the first synchronous receiving signal and a second peak phase of the second synchronous receiving signal to calculate a peak phase difference. A compensation phase is obtained based on the peak phase difference. The signal synchronization device directly uses the compensation phase to perform phase compensation on the second radar echo signal, or sends the compensation phase to the second communication device, such that the second communication device uses the compensation phase to perform phase compensation on the second radar echo signal.

In practical applications, the signal synchronization device is located in the first communication device and/or the second communication device. When the signal synchronization device is located in the first communication device, the signal synchronization device is used to make the phase of the first radar echo signal synchronized with that of the second radar echo signal. When the signal synchronization device is located in the second communication device, the signal synchronization device is used to make the phase of the second radar echo signal synchronized with that of the first radar echo signal. Based on this, a schematic composition structure diagram of a communication device is provided in an embodiment of the disclosure.

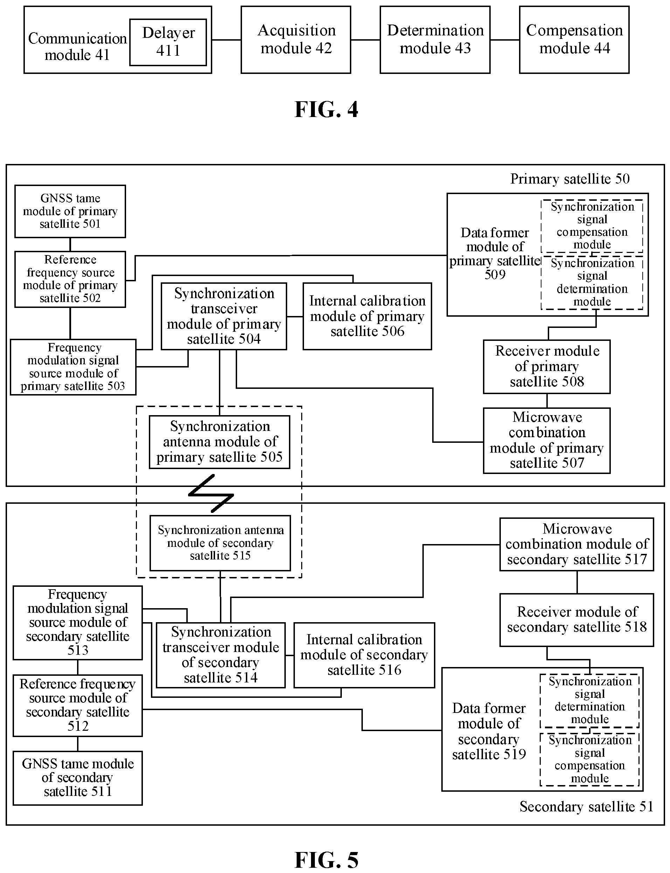

FIG. 4 is a schematic composition structure diagram of a communication device not being part of the invention. As illustrated in FIG. 4, the communication device includes: a communication module 41, an acquisition module 42, a determination module 43, and a compensation module 44. The communication module 41 has a built-in delayer 411.

First, the communication device receives, through the communication module 41, a phase synchronization signal and a radar signal sent by other communication devices. And the communication device uses the delayer 411 built in the communication module 41 to synchronously receive a synchronization receiving signal corresponding to the phase synchronization signal and a radar echo signal corresponding to the radar signal.

The acquisition module 42 acquires the synchronous receiving signal of the communication device and the synchronous receiving signals of other communication devices.

The determination module 43 extracts a peak phase difference based on the two synchronous receiving signals acquired by the acquisition module 42, and then determines a compensation phase.

The compensation module 44 performs, based on the compensation phase determined by the determination module 43, phase compensation on the radar echo signal received by the communication device including the signal synchronization device.

Exemplarily, the first communication device may serve as a primary satellite of the double-satellite SAR system, and the second communication device may serve as a secondary satellite of the double-satellite SAR system.

An embodiment of the disclosure not being part of the invention specifically provides an implementation scenario, that is, an implementation process of a synchronization process of a radar echo signal when the first communication device serves as the primary satellite of the double-satellite SAR system, the second communication device serves as the secondary satellite of the double-satellite SAR system and the signal synchronization device is located on the secondary satellite.

FIG. 5 is a schematic composition structure diagram of an improved double-satellite SAR system not being part of the invention. As illustrated in FIG. 5, the system includes a primary satellite 50 and a secondary satellite 51. The primary satellite 50 is configured to transmit a radar signal, and the secondary satellite 51 is configured to receive an echo signal of the radar signal. Or, the secondary satellite 51 is configured to transmit a radar signal, and the primary satellite 50 is configured to receive an echo signal of the radar signal.

The following specifically describes mainly the situation when the primary satellite 50 is configured to transmit a radar signal and the secondary satellite 51 is configured to receive an echo signal of the radar signal.

The primary satellite 50 includes: a Global Navigation Satellite System (GNSS) tame module of primary satellite 501, a reference frequency source module of primary satellite 502, a frequency modulation signal source module of primary satellite 503, a synchronization transceiver module of primary satellite 504, a synchronization antenna module of primary satellite 505, an internal calibration module of primary satellite 506, a microwave combination module of primary satellite 507, a receiver module of primary satellite 508, and a data former module of primary satellite 509. The secondary satellite 51 includes: a GNSS tame module of secondary satellite 511, a reference frequency source module of secondary satellite 512, a frequency modulation signal source module of secondary satellite 513, a synchronization transceiver module of secondary satellite 514, a synchronization antenna module of secondary satellite 515, an internal calibration module of secondary satellite 516, a microwave combination module of secondary satellite 517, a receiver module of secondary satellite 518, and a data former module of secondary satellite 519. The main functions of each module are described as follows.

The GNSS tame module of primary satellite 501 is configured to provide a time frequency signal for the reference frequency source module of primary satellite 502. The reference frequency source module of primary satellite 502 is configured to generate, based on a frequency provided by the GNSS tame module of primary satellite 501, a plurality of operating frequency signals to be provided for the frequency modulation signal source module of primary satellite 503.

The frequency modulation signal source module of primary satellite 503 is configured to provide a linear frequency modulation signal for the synchronization transceiver module of primary satellite 504 and the internal calibration module of primary satellite 506.

The synchronization transceiver module of primary satellite 504 is configured to transmit a phase synchronization signal to or receive a phase synchronization signal from the secondary satellite 51 through the synchronization antenna module of primary satellite 505, and transmit the received phase synchronization signal to the microwave combination module of primary satellite 507.

The synchronization antenna module of primary satellite 505 is configured to transmit a phase synchronization signal to or receive a phase synchronization signal from the secondary satellite 51.

The internal calibration module of primary satellite 506 is configured to scale a signal sent by the synchronization transceiver module which is of the primary satellite 50, and the internal calibration module of secondary satellite 516 is configured to scale a signal sent by the synchronization transceiver module which is of the secondary satellite 51.

The microwave combination module of primary satellite 507 is configured to receive a phase synchronization signal transmitted by the synchronization transceiver module of primary satellite 504, and transmit a signal to the synchronization transceiver module of primary satellite 504.

The receiver module of primary satellite 508 is configured to receive a signal sent by the microwave combination module of primary satellite 507, and send a signal to the data former module of primary satellite 509.

The data former module of primary satellite 509 is configured to perform data processing on the received signal.

The data former module of primary satellite 509 may also include a synchronization signal determination module and a synchronization signal compensation module. When the secondary satellite 51 sends a synchronization signal to the primary satellite 50, the main function of the synchronization signal determination module and the synchronization signal compensation module of the primary satellite 50 lies in that: when the secondary satellite 51 transmits a radar signal, both the primary satellite 50 and secondary satellite 51 receive a radar echo signal. The synchronization signal determination module is configured to determine a compensation phase of the synchronous receiving signal received by the primary satellite 50, and then the synchronization signal compensation module is configured to compensate the radar echo signal received by the primary satellite 50.

The GNSS tame module of secondary satellite 511 is configured to provide a time frequency signal for the reference frequency source module of secondary satellite 512.

The reference frequency source module of secondary satellite 512 is configured to generate, based on a frequency provided by the GNSS tame module of secondary satellite 511, a plurality of operating frequency signals to be provided for the frequency modulation signal source module of secondary satellite 513.

The frequency modulation signal source module of secondary satellite 513 is configured to provide a linear frequency modulation signal for the synchronization transceiver module of secondary satellite 514 and the internal calibration module of secondary satellite 516.

The synchronization transceiver module of secondary satellite 514 is configured to transmit a phase synchronization signal to or receive a phase synchronization signal from the primary satellite 540 through the secondary satellite synchronization antenna module 515, and transmit the received phase synchronization signal to the microwave combination module of secondary satellite 517.

The synchronization antenna module of secondary satellite 515 is configured to transmit a phase synchronization signal to or receive a phase synchronization signal from the primary satellite 50.

The microwave combination module of secondary satellite 517 is configured to receive a phase synchronization signal transmitted by the synchronization transceiver module of secondary satellite 514, and transmit a signal to the synchronization transceiver module of secondary satellite 514.

The receiver module of secondary satellite 518 is configured to receive a signal sent by the microwave combination module of secondary satellite 517, and send a signal to the data former module of secondary satellite 519.

The data former module of secondary satellite 519 is configured to perform data processing on the received signal.

The data former module of secondary satellite 519 may also include a synchronization signal determination module and a synchronization signal compensation module. When the primary satellite 50 sends a synchronization signal to the secondary satellite 51, the main function of the synchronization signal determination module and the synchronization signal compensation module of the secondary satellite 51 lies in that: when the primary satellite 50 transmits a radar signal, both the primary satellite 50 and the secondary satellite 51 receive a radar echo signal. The synchronization signal determination module is configured to determine a compensation phase of the synchronous receiving signal received by the secondary satellite 51, and then the synchronization signal compensation module is configured to compensate the radar echo signal received by the secondary satellite 51.

Reference frequency sources of the primary satellite 50 and the secondary satellite 51 may use a GNSS to tame an oscillator, which can minimize a radar frequency deviation between the two satellites, such that sampling during a collection process of phase error data meets the Nyquist theorem, which can further simplify the complexity of phase synchronization error extraction and compensation, and improve the reliability of phase synchronization. The synchronization signal determination module and the compensation module are embedded in the data former module, which is beneficial to the integrated design of the system.

In practical applications, the operating mode of a double-satellite formation SAR system is a double-fighting mode. The primary satellite 50 transmits a radar signal to the target device. The receiver module of primary satellite 508 receives the radar echo signal sent by the microwave combination module of primary satellite 507, and sends a radar echo signal to the data former module of primary satellite 509. The receiver module of secondary satellite 518 receives the radar echo signal sent by the microwave combination module of secondary satellite 517, and sends a radar echo signal to the data former module of secondary satellite 519. The synchronization transceiver module of primary satellite 504 transmits a phase synchronization signal, which is received through the synchronization antenna module of secondary satellite 515. The synchronization transceiver module of secondary satellite 514 transmits a phase synchronization signal, which is received through the synchronization antenna module of primary satellite 505. In the operating mode, it is only necessary to perform phase compensation on the radar echo signal which is received by the secondary satellite 51 that does not transmit the radar signal.

The synchronization antenna module 505 of the primary satellite 50 and the synchronization antenna module 515 of the secondary satellite 51 have built-in receiving modules, in which delayers are built respectively. On the primary satellite 50 side, the delayer is used to delay the transmission time of phase synchronization signal, therefore, the synchronous receiving signal is formed, and the synchronous receiving signal and the radar echo signal can be received synchronously. On the secondary satellite 51 side, the delayer is used to delay the transmission time of phase synchronization signal, therefore, the synchronous receiving signal is formed, and the synchronous receiving signal and the radar echo signal can be received synchronously. The signal synchronization device is located in the secondary satellite 51. At this time, the synchronization signal processing device acquires the synchronous receiving signal received by the primary satellite 50, extracts a peak phase of the synchronous receiving signal received by the primary satellite 50, and simultaneously performs a peak phase difference with a peak phase corresponding to the synchronous receiving signal which is received by the secondary satellite 51. The synchronization signal determination module of the secondary satellite 51 then determines a compensation phase, and the synchronization signal compensation module is configured to compensate, based on the compensation phase, the radar echo signal received by the secondary satellite 51.

The device embodiments not being part of the invention described above are only schematic. For example, a division of the modules is only a logic function division, and other division manners may be adopted during practical implementation. For example, multiple modules or components may be combined or integrated into another system, or some characteristics may be neglected or not executed. In addition, coupling or direct coupling or communication connection between each displayed or discussed component may be indirect coupling or communication connection, implemented through some interfaces, of equipment or modules, and may be electrical and mechanical or adopt other forms.

The modules described as separate parts may or may not be physically separated, and parts displayed as modules may or may not be physical modules, and namely may be located in the same place, or may also be distributed to multiple network modules. Part of or all of the modules may be selected according to a practical requirement to achieve the purpose of the solutions of the embodiments not being part of the invention.

In addition, each functional module in each embodiment of the disclosure may be integrated into a processing module, each module may also serve as an independent module and two or more than two modules may also be integrated into a module. The integrated module may be implemented in a hardware form and may also be implemented in the form of hardware and software functional modules. Those of ordinary skill in the art can understand that all or part of the steps of the above method embodiments may be completed by program instructions related hardware. The foregoing program may be stored in a computer-readable storage medium. When the program is executed, the steps of the above method embodiments are performed. The foregoing storage medium includes: various media capable of storing program codes such as a mobile storage device, a Read-Only Memory (ROM), a Random Access Memory (RAM), a magnetic disk, or an optical disk and so on.

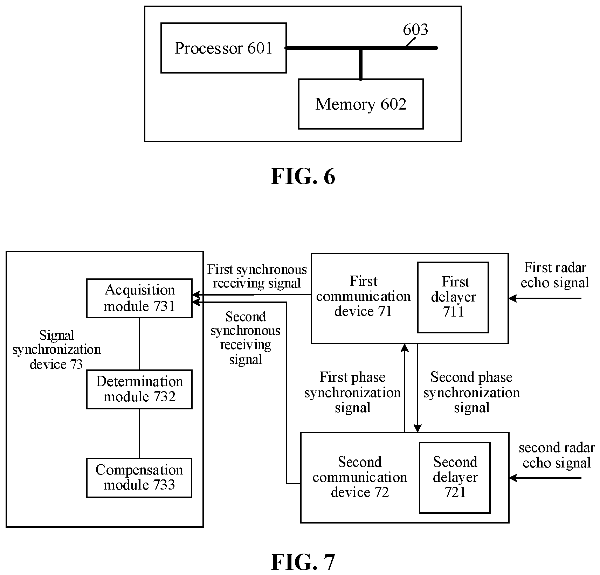

An embodiment of the disclosure not being part of the invention also provides another device for signal synchronization. FIG. 6 is a schematic composition structure diagram of a device for signal synchronization not being part of the invention. The device for signal synchronization includes: a processor 601 and a memory 602 configured to store a computer program capable of running on the processor.

The processor 601 implements, when running the computer program in the memory 602, the following steps.

A first synchronous receiving signal received by a first communication device and a second synchronous receiving signal received by a second communication device are acquired. The first communication device includes a first delayer which is configured to enable the first communication device to synchronously receive a first radar echo signal and the first synchronous receiving signal. The second communication device includes a second delayer which is configured to enable the second communication device to synchronously receive a second radar echo signal and the second synchronous receiving signal.

A compensation phase for the second synchronous receiving signal is determined based on the first synchronous receiving signal and the second synchronous receiving signal.

Phase compensation is performed on the second radar echo signal according to the compensation phase, to obtain a compensated second radar echo signal. The first radar echo signal and the compensated second radar echo signal are in phase synchronization.

The first communication device includes a first communication module which is configured to transmit a radar signal to a target device and transmit a second phase synchronization signal to the second communication device.

The second communication device includes a second communication module which is configured to transmit a first phase synchronization signal to the first communication device.

The first communication module is further configured to receive the first radar echo signal formed after the target device reflects the radar signal, and receive, after delaying a first target time by using the first delayer, the first phase synchronization signal to obtain the first synchronous receiving signal, such that the first radar echo signal and the first synchronous receiving signal are received synchronously.

The second communication module is further configured to receive the second radar echo signal formed after the target device reflects the radar signal, and receive, after delaying a second target time by using the second delayer, the second phase synchronization signal to obtain the second synchronous receiving signal, such that the second radar echo signal and the second synchronous receiving signal are received synchronously.

The first communication device simultaneously transmits the radar signal and the second phase synchronization signal.

The radar signal and the second phase synchronization signal are signals of the same carrier frequency.

The first communication device further includes a generation module, which is configured to generate the radar signal by mixing a carrier frequency signal with a linear frequency modulation signal, and also configured to directly generate the second phase synchronization signal by using the carrier frequency signal.

The processor 601 specifically implements, when running the computer program in the memory 602, the following steps. A peak phase difference is obtained based on a peak phase of the first synchronous receiving signal and a peak phase of the synchronous receiving signal. The compensation phase is obtained based on the peak phase difference.

Of course, in practical applications, as illustrated in FIG. 6, various components in the device for signal synchronization are coupled together through a bus system 603. It can be understood that the bus system 603 is configured to implement connection and communication between the components. The bus system 603 includes a data bus, a power bus, a control bus, and a status signal bus. However, for the sake of clarity, various buses are marked as the bus system 603 in FIG. 6.

In practical applications, the processor may be at least one of the following: an Application Specific Integrated Circuit (ASIC), a Digital Signal Processing Device (DSPD), a Programmable Logic Device (PLD), a Field-Programmable Gate Array (FPGA), a controller, a microcontroller, and a microprocessor. It can be understood that for different devices, there may be other electronic devices for implementing the functions of the above processor, which is not specifically limited in the embodiment of the disclosure.

The above memory may be a volatile memory, such as a RAM; or a nonvolatile memory, such as a ROM, a flash memory, a Hard Disk Drive (HDD) or a Solid-State Drive (SDD); or a combination of the above types of memory. Instructions and data are provided for the processor.

By adopting the above technical solution, an acquisition module acquires a first synchronous receiving signal received by a first communication device and a second synchronous receiving signal received by a second communication device. The first communication device synchronously receives a first radar echo signal and the first synchronous receiving signal by using a first delayer. The second communication device synchronously receives a second radar echo signal and the second synchronous receiving signal by using a second delayer. A determination module determines a compensation phase for the second synchronous receiving signal based on the acquired first synchronous receiving signal and second synchronous receiving signal. A compensation module performs, according to the compensation phase, phase compensation on the second radar echo signal to obtain a compensated second radar echo signal. Therefore, phase synchronization between the first radar echo signal and the compensated second radar echo signal is achieved, which improves the imaging focus and the phase accuracy, and further improves the imaging quality.

The invention also provides a system for signal synchronization. FIG. 7 is a schematic structure diagram of a system for signal synchronization according to the invention. The system includes a first communication device 71, a second communication device 72 and a signal synchronization device 73, which implement a signal synchronization process.

The first communication device 71 includes a first delayer 711 which is configured to enable the first communication device to synchronously receive a first radar echo signal and the first synchronous receiving signal.

The second communication device 72 includes a second delayer 721 which is configured to enable the second communication device to synchronously receive a second radar echo signal and the second synchronous receiving signal.

The signal synchronization device 73 include: an acquisition module 731, a determination module 732 and a compensation module 733.

The acquisition module 731 is configured to acquire the first synchronous receiving signal received by the first communication device and the second synchronous receiving signal received by the second communication device.

The determination module 732 is configured to determine a compensation phase for the second synchronous receiving signal based on the first synchronous receiving signal and the second synchronous receiving signal.

The compensation module 733 is configured to perform, according to the compensation phase, phase compensation on the second radar echo signal to obtain a compensated second radar echo signal. The first radar echo signal and the compensated second radar echo signal are in phase synchronization.

The first communication device 71 includes a first communication module which is configured to transmit a radar signal to a target device and transmit a second phase synchronization signal to the second communication device 72.

The second communication device 72 includes a second communication module which is configured to transmit a first phase synchronization signal to the first communication device 71.

The first communication module is further configured to receive the first radar echo signal formed after the target device reflects the radar signal, and receive, after delaying a first target time by using the first delayer 711, the first phase synchronization signal to obtain the first synchronous receiving signal, such that the first radar echo signal and the first synchronous receiving signal are received synchronously.

The second communication module is further configured to receive the second radar echo signal formed after the target device reflects the radar signal, and receive, after delaying a second target time by using the second delayer 721, the second phase synchronization signal to obtain the second synchronous receiving signal, such that the second radar echo signal and the second synchronous receiving signal are received synchronously.

In some embodiments, the first communication device 71 is configured to simultaneously transmit the radar signal and the second phase synchronization signal.

In some embodiments, the radar signal and the second phase synchronization signal are signals of the same carrier frequency.

The first communication device 71 further includes a generation module, which is configured to generate the radar signal by mixing a carrier frequency signal with a linear frequency modulation signal, and also configured to directly generate the second phase synchronization signal by using the carrier frequency signal.

In some embodiments, the determination module 732 is specifically configured to obtain a peak phase difference based on a peak phase of the first synchronous receiving signal and a peak phase of the synchronous receiving signal. The compensation phase is obtained based on the peak phase difference.

The methods disclosed in several method embodiments provided in the disclosure may be arbitrarily combined without conflicts to obtain new method embodiments.

The features disclosed in several product embodiments provided in the disclosure may be arbitrarily combined without conflicts to obtain new product embodiments.

The features disclosed in several method or device embodiments provided in the disclosure may be arbitrarily combined without conflicts to obtain new method or device embodiments.

The above are only the specific implementation mode of the disclosure and not intended to limit the protection scope of the disclosure. Any variations or replacements apparent to those skilled in the art within the technical scope disclosed by the disclosure shall fall within the scope of protection of the disclosure. Therefore, the protection scope of the disclosure should be determined by the protection scope of the claims.

## Claims

1. A system for signal synchronization comprising:
a first communication device (21), a second communication device (22) and a signal synchronization device,
wherein the first communication device (21) comprises a first delayer (211) which is configured to enable the first communication device (21) to synchronously receive a first radar echo signal and a first synchronous receiving signal;
the second communication device (22) comprising a second delayer (221) which is configured to enable the second communication device (22) to synchronously receive a second radar echo signal and a second synchronous receiving signal;
the signal synchronization device comprises:
an acquisition module (101), configured to acquire the first synchronous receiving signal received by the first communication device (21) and the second synchronous receiving signal received by the second communication device (22);
a determination module (102), configured to determine a compensation phase for the second synchronous receiving signal based on the first synchronous receiving signal and the second synchronous receiving signal; and
a compensation module (103), configured to perform, according to the compensation phase, phase compensation on the second radar echo signal to obtain a compensated second radar echo signal, wherein the first radar echo signal and the compensated second radar echo signal are in phase synchronization;
wherein the first communication device (21) comprises a first communication module which is configured to transmit a radar signal to a target device (23) and transmit a second phase synchronization signal to the second communication device (22);
the second communication device (22) comprises a second communication module which is configured to transmit a first phase synchronization signal to the first communication device (21);
the first communication module is further configured to receive the first radar echo signal formed after the target device (23) reflects the radar signal, and receive, after delaying a first target time by using the first delayer (211), the first phase synchronization signal to obtain the first synchronous receiving signal, such that the first radar echo signal and the first synchronous receiving signal are received synchronously; and
the second communication module is further configured to receive the second radar echo signal formed after the target device (23) reflects the radar signal, and receive, after delaying a second target time by using the second delayer (221), the second phase synchronization signal to obtain the second synchronous receiving signal, such that the second radar echo signal and the second synchronous receiving signal are received synchronously;
**characterized in that** the first communication device (21) further comprises a generation module, configured to generate the radar signal by mixing a carrier frequency signal with a linear frequency modulation signal, and also configured to directly generate the second phase synchronization signal by using the carrier frequency signal.

2. The system of claim 1, wherein the first communication device (21) is configured to simultaneously transmit the radar signal and the second phase synchronization signal.

3. The system of claim 1 or 2, wherein the radar signal and second phase synchronization are signals of a same carrier frequency.

4. The system of any one of claims 1 to 3, wherein the second communication device (22) further comprises a generation module, configured to generate the first phase synchronization signal by using the carrier frequency signal.

5. The system of claim 1, wherein the determination module (102) is specifically configured to obtain a peak phase difference based on a peak phase of the first synchronous receiving signal and a peak phase of the second synchronous receiving signal, and obtain the compensation phase based on the peak phase difference.

## Patentansprüche

1. Ein System zur Signalsynchronisation, das Folgendes aufweist:
eine erste Kommunikationseinrichtung (21), eine zweite Kommunikationseinrichtung (22) und eine Signalsynchronisationseinrichtung,
wobei die erste Kommunikationseinrichtung (21) eine erste Verzögerungsstufe (211) aufweist, die derart ausgebildet ist, dass sie die erste Kommunikationseinrichtung (21) in die Lage versetzt, ein erstes Radarechosignal und ein erstes synchrones Empfangssignal synchron zu empfangen;
die zweite Kommunikationseinrichtung (22) eine zweite Verzögerungsstufe (221) aufweist, die derart ausgebildet ist, dass sie die zweite Kommunikationseinrichtung (22) in die Lage versetzt, ein zweites Radarechosignal und ein zweites synchrones Empfangssignal synchron zu empfangen;
die Signalsynchronisationseinrichtung weist folgendes auf:
ein Erfassungsmodul (101), das derart ausgebildet ist, dass es das erste synchrone Empfangssignal, das von der ersten Kommunikationseinrichtung (21) empfangen wird, und das zweite synchrone Empfangssignal, das von der zweiten Kommunikationseinrichtung (22) empfangen wird, erfasst;
ein Bewertungsmodul (102), das derart ausgebildet ist, dass es eine Kompensationsphase für das zweite synchrone Empfangssignal auf der Grundlage des ersten synchronen Empfangssignals und des zweiten synchronen Empfangssignals bestimmt; und
ein Kompensationsmodul (103), das derart ausgebildet ist, dass es gemäß der Kompensationsphase eine Phasenkompensation an dem zweiten Radarechosignal durchführt, um ein kompensiertes zweites Radarechosignal zu erhalten, wobei das erste Radarechosignal und das kompensierte zweite Radarechosignal phasensynchron sind;
wobei die erste Kommunikationseinrichtung (21) ein erstes Kommunikationsmodul aufweist, das derart ausgebildet ist, dass es ein Radarsignal an eine Zieleinrichtung (23) sendet und ein zweites Phasensynchronisationssignal an die zweite Kommunikationseinrichtung (22) überträgt;
die zweite Kommunikationseinrichtung (22) ein zweites Kommunikationsmodul aufweist, das derart ausgebildet ist, dass es ein erstes Phasensynchronisationssignal an die erste Kommunikationseinrichtung (21) sendet; das erste Kommunikationsmodul derart ausgebildet ist, dass es das erste Radarechosignal empfängt, nachdem die Zielvorrichtung (23) das Radarsignal reflektiert hat, und nach der Verzögerung einer ersten Zielzeit durch Verwendung der ersten Verzögerungsstufe (211) das erste Phasensynchronisationssignal empfängt, um das erste synchrone Empfangssignal zu erhalten, so dass das erste Radarechosignal und das erste synchrone Empfangssignal synchron empfangen werden; und
das zweite Kommunikationsmodul derart ausgebildet ist, dass es das zweite Radarechosignal empfängt, nachdem die Zielvorrichtung (23) das Radarsignal reflektiert hat, und nach der Verzögerung einer zweiten Zielzeit durch Verwendung der zweiten Verzögerungsstufe (221) das zweite Phasensynchronisationssignal empfängt, um das zweite synchrone Empfangssignal zu erhalten, so dass das zweite Radarechosignal und das zweite synchrone Empfangssignal synchron empfangen werden;
**dadurch gekennzeichnet, dass** die erste Kommunikationseinrichtung (21) ferner ein Erzeugungsmodul aufweist, das derart ausgebildet ist, dass es das Radarsignal durch Mischen eines Trägerfrequenzsignals mit einem linearen Frequenzmodulationssignal erzeugt, und auch derart ausgebildet ist, dass es das zweite Phasensynchronisationssignal unter Verwendung des Trägerfrequenzsignals direkt erzeugt.

2. System nach Anspruch 1, wobei die erste Kommunikationseinrichtung (21) derart ausgebildet ist, dass sie gleichzeitig das Radarsignal und das zweite Phasensynchronisationssignal überträgt.

3. System nach Anspruch 1 oder 2, wobei das Radarsignal und die zweite Phasensynchronisation Signale mit gleicher Trägerfrequenz sind.

4. Das System nach einem der Ansprüche 1 bis 3, wobei die zweite Kommunikationseinrichtung (22) ferner ein Erzeugungsmodul aufweist, das derart ausgebildet ist, dass es das erste Phasensynchronisationssignal unter Verwendung des Trägerfrequenzsignals erzeugt.

5. System nach Anspruch 1, wobei das Bewertungsmodul (102) derart ausgebildet ist, dass es eine Peak-Phasendifferenz auf der Grundlage einer Peak-Phase des ersten synchronen Empfangssignals und einer Peak-Phase des zweiten synchronen Empfangssignals ermittelt und die Kompensationsphase auf der Grundlage der Peak-Phasendifferenz ermittelt.

## Revendications

1. Système de synchronisation de signal, comprenant :
un premier dispositif de communication (21), un deuxième dispositif de communication (22) et un dispositif de synchronisation de signal,
dans lequel le premier dispositif de communication (21) comprend un premier retardateur (211) qui est configuré pour permettre au premier dispositif de communication (21) de recevoir de manière synchrone un premier signal d'écho radar et un premier signal de réception synchrone ;
le deuxième dispositif de communication (22) comprend un deuxième retardateur (221) qui est configuré pour permettre au deuxième dispositif de communication (22) de recevoir de manière synchrone un deuxième signal d'écho radar et un deuxième signal de réception synchrone ;
le dispositif de synchronisation de signal comprend :
un module d'acquisition (101), configuré pour acquérir le premier signal de réception synchrone reçu par le premier dispositif de communication (21) et le deuxième signal de réception synchrone reçu par le deuxième dispositif de communication (22),
un module de détermination (102), configuré pour déterminer une phase de compensation pour le deuxième signal de réception synchrone sur la base du premier signal de réception synchrone et du deuxième signal de réception synchrone ; et
un module de compensation (103), configuré pour réaliser, en fonction de la phase de compensation, une compensation de phase sur le deuxième signal d'écho radar pour obtenir un deuxième signal d'écho radar compensé, dans lequel le premier signal d'écho radar et le deuxième signal d'écho radar compensé sont en synchronisation de phase ;
dans lequel le premier dispositif de communication (21) comprend un premier module de communication qui est configuré pour transmettre un signal radar vers un dispositif cible (23) et transmettre un deuxième signal de synchronisation de phase au deuxième dispositif de communication (22) ;
le deuxième dispositif de communication (22) comprend un deuxième module de communication qui est configuré pour transmettre un premier signal de synchronisation de phase au premier dispositif de communication (21) ;
le premier module de communication est configuré en outre pour recevoir le premier signal d'écho radar formé après que le dispositif cible (23) a réfléchi le signal radar, et recevoir, après avoir retardé un premier temps cible en utilisant le premier retardateur (211), le premier signal de synchronisation de phase pour obtenir le premier signal de réception synchrone, de sorte que le premier signal d'écho radar et le premier signal de réception synchrone sont reçus de manière synchrone ; et
le deuxième module de communication est configuré en outre pour recevoir le deuxième signal d'écho radar formé après que le dispositif cible (23) a réfléchi le signal radar, et recevoir, après avoir retardé un deuxième temps cible en utilisant le deuxième retardateur (221), le deuxième signal de synchronisation de phase pour obtenir le deuxième signal de réception synchrone, de sorte que le deuxième signal d'écho radar et le deuxième signal de réception synchrone sont reçus de manière synchrone ;
**caractérisé en ce que** le premier dispositif de communication (21) comprend en outre un module de génération, configuré pour générer le signal radar en mélangeant un signal de fréquence porteuse avec un signal de modulation de fréquence linéaire, et également configuré pour générer directement le deuxième signal de synchronisation de phase en utilisant le signal de fréquence porteuse.

2. Système selon la revendication 1, dans lequel le premier dispositif de communication (21) est configuré pour transmettre simultanément le signal radar et le deuxième signal de synchronisation de phase.

3. Système selon la revendication 1 ou 2, dans lequel le signal radar et la deuxième synchronisation de phase sont des signaux d'une même fréquence porteuse.

4. Système selon l'une quelconque des revendications 1 à 3, dans lequel le deuxième dispositif de communication (22) comprend en outre un module de génération, configuré pour générer le premier signal de synchronisation de phase en utilisant le signal de fréquence porteuse.

5. Système selon la revendication 1, dans lequel le module de détermination (102) est configuré spécifiquement pour obtenir une différence de phase de crête sur la base d'une phase de crête du premier signal de réception synchrone et d'une phase de crête du deuxième signal de réception synchrone, et obtenir la phase de compensation sur la base de la différence de phase de crête.
